# DEMANDE DE BREVET EUROPEEN

(11) **EP 0 898 153 A1**
(43) Date de publication de la demande: **24.02.1999**
(21) Numéro de dépôt: 98401816.8
(22) Date de dépôt: 17.07.1998
(51) Int. Cl.: G01F 23/284

(54) **Dispositif et procédé de détection de niveau par diffusion de micro-ondes**

(30) Priorité: 22.07.1997 FR 9709289
(71) Demandeur: Pompes Salmson, 92500 Rueil Malmaison (FR)
(72) Inventeur: Mongazon, Thierry, 53200 Longuefuye (FR); Kernours, Michel, 35370 Mondevert (FR); Chaslerie, Jacques, 44380 St Lusse sur Loire (FR)
(74) Mandataire: Pochart, François

(57) **Abrégé**

L'invention concerne un dispositif et un procédé de détection de niveau par diffusion de micro-ondes. Elle propose de diffuser des micro-ondes dans le produit et de mesurer la puissance reçue sur un ou plusieurs récepteurs de micro-ondes. En présence de produit au niveau d'un récepteur, le récepteur reçoit les micro-ondes diffusées dans le produit.

La comparaison de la puissance sur le ou les récepteurs avec une valeur seuil permet une détection du niveau.

On assure ainsi simplement la détection d'un ou plusieurs niveaux, même dans des conditions très difficiles, comme par exemple pour des boues ou des eaux usées.

## Description

La présente invention a pour objet un dispositif de détection de niveau, par diffusion de micro-ondes dans le produite dont le niveau doit être détecté. Elle concerne aussi un procédé correspondant de détection de niveau.

La détection de niveau trouve de nombreuses applications domestiques et industrielles. Elle s'effectue traditionnellement à l'aide de flotteurs et de dispositifs de détection mécaniques associés à ces flotteurs, comme dans les chasses d'eau classiques. Ce type de solution n'est pas satisfaisant: une croûte peut se former à la surface des effluents, ce qui peut bloquer le flotteur et entraver le fonctionnement du dispositif de détection. Dans le cas d'une pompe commandée par un tel flotteur, ceci peut se traduire par un fonctionnement à vide de la pompe, ou par un débordement.

D'autres types de dispositifs ont été proposés. La documentation commerciale de la société VEGA décrit ainsi divers principes de détection, et notamment une barrière à micro-ondes permettant une détection sans contact, dans des conditions rudes. La barrière de détection fonctionne sur le principe d'une barrière photoélectrique: un émetteur envoie des micro-ondes à une fréquence de 5,8 GHz vers un récepteur situé en face; l'arrivée entre émetteur et récepteur du produit dont le niveau est à détecter provoque une absorption des micro-ondes et donc un niveau de réception atténué. Le récepteur signale cette atténuation par un ordre de commutation.

Ce dispositif présente les inconvénients suivants. Il ne permet que la détection d'absence ou de présence du produit, sans permettre de détecter réellement le niveau du produit. Il est en outre sensible à des variations dans la nature du produit ou des couches supérieures du produit, qui peuvent modifier l'absorption des micro-ondes dans le dispositif et polluer la détection. Ceci peut notamment être le cas si des effluents se forment à la surface du produit. Enfin, ce dispositif nécessite un émetteur et un récepteur distinct, ce qui complique sa mise en oeuvre.

WO-A-96 41135 décrit un système de mesure de niveau qui mesure la hauteur d'un produit dans un conteneur en utilisant une antenne micro-onde et une source micro-onde de basse puissance. La source émet via l'antenne des signaux micro-ondes dans le conteneur; les signaux réfléchis par la surface du liquide sont reçus par un récepteur micro-ondes basse puissance. Un circuit permet de calculer la mesure du niveau en fonction des signaux reçus. FR-A-2 233 608 décrit un dispositif de mesure par réflexion de micro-ondes sur la surface du produit, suivant le même principe.

Ce dispositif utilise un circuit complexe et cher.

WO-A-95 11430 décrit un autre dispositif de mesure par micro-ondes, avec un émetteur micro-ondes, un détecteur et un guide d'ondes. Le guide d'ondes s'étend dans le conteneur et présente des ouvertures permettant l'entrée du produit à détecter. L'entrée du produit dans le guide d'onde interrompt le chemin de transmission des micro-ondes et le récepteur détecte l'interruption, qui indique que le produit a atteint un niveau prédéterminé. Ce dispositif est peu robuste, et ne peut pas fonctionner correctement dans des conditions difficiles, comme par exemple pour la détection du niveau d'eaux usées ou de boues.

L'invention propose un dispositif et un procédé de détection qui pallie ces inconvénients; elle permet une détection simple et fiable, avec un coût limité. Le dispositif de l'invention est d'une grande simplicité d'installation et d'utilisation.

Plus précisément, l'invention propose un dispositif de détection de niveau, comprenant
- un émetteur de micro-ondes, pour émettre des micro-ondes dans un produit dont le niveau est à détecter;
- au moins un récepteur de micro-ondes, pour recevoir les micro-ondes diffusées dans le produit;
- des moyens de mesure de la puissance reçue par le ou les récepteurs.

Selon un mode de réalisation, le dispositif est caractérisé par une pluralité de récepteurs correspondant aux différents niveaux à détecter.

Selon un mode de réalisation, le dispositif est caractérisé en ce que les micro-ondes présentent une fréquence entre 2 et 3, de préférence voisine de 2,4 GHz.

Selon un mode de réalisation, le dispositif est caractérisé en ce que les moyens de mesure comparent la valeur de la puissance reçue avec une valeur de seuil.

Selon un mode de réalisation, le dispositif est caractérisé en ce que l'émetteur et le ou les récepteurs sont alignés sur un même support.

L'invention fournit encore un procédé de détection de niveau, comprenant
- l'émission de micro-ondes dans le produit dont le niveau est à détecter;
- la réception de micro-ondes sur au moins un récepteur disposé à un niveau à détecter;
- la mesure de la puissance reçue par le ou les récepteurs.

Selon un mode de réalisation la fréquence des micro-ondes est choisie de sorte à permettre leur diffusion dans le produit dont le niveau est à détecter.

Selon un mode de réalisation, la fréquence des micro-ondes est comprise entre 2 et 3, et est de préférence voisine de 2,4 GHz.

Selon un mode de réalisation, l'étape de mesure comprend la comparaison de la puissance reçue avec une valeur de seuil.

Selon un mode de réalisation, l'étape d'émission s'effectue par immersion d'un émetteur dans le produit dont le niveau est à détecter.

Selon un mode de réalisation, l'étape d'émission s'effectue depuis l'extérieur du contenant du produit dont le niveau est à détecter.

D'autres caractéristiques et avantages de l'invention apparaîtront à la lecture de la description qui suit de modes de réalisation de l'invention, donnée à titre d'exemple et en référence aux dessins annexés qui montrent:
- figure 1, une vue de côté d'un dispositif de détection selon l'invention;
- figure 2, une vue de face d'un dispositif de détection selon l'invention;
- figure 3, une représentation schématique d'une carte imprimée pour un dispositif selon l'invention.

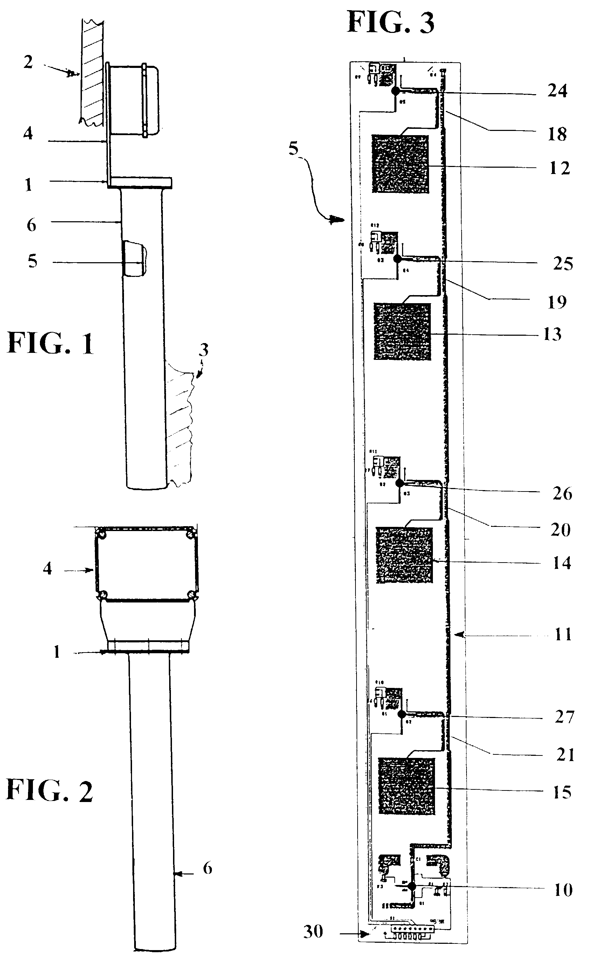

La figure 1 montre une vue de côté d'un dispositif de détection selon l'invention, qui est destiné à être immergé, au moins partiellement dans le produit dont le niveau doit être détecté. Le dispositif comprend un support 1, présentant dans le mode de réalisation de la figure 1 la forme d'une équerre susceptible d'être fixée sur la paroi 2 d'un contenant destiné à recevoir le produit 3. Sur le support 1 est monté d'une part un coffret 4, pour recevoir une électronique de commande, dont les fonctions seront expliquées plus en détail dans la suite.

Est d'autre part montée sur le support 1 une carte imprimée 5, décrite en détail en référence à la figure 3; cette carte est protégée par une enveloppe 6 en un matériau approprié, par exemple un doigt de gant en un plastique étanche et résistant au produit dont le niveau doit être détecté.

Le dispositif de la figure 1 permet de détecter le niveau d'un produit, à différentes hauteurs le long de la carte 5. Il est possible de modifier la longueur de celle-ci, pour détecter les niveaux sur une hauteur plus importante, ou de séparer cette carte en plusieurs dispositifs distincts.

La figure montre une vue de face d'un dispositif de détection selon l'invention; on reconnaît sur la figure 2 les différents éléments déjà décrits en référence à la figure 1.

La figure 3 montre un exemple de réalisation d'une carte imprimée selon l'invention. La carte 5 présente, au voisinage d'une extrémité, un émetteur de micro-ondes 10, par exemple un transistor émetteur hyperfréquences, avec ses composant associés. La ou les fréquences d'émission de l'émetteur 10 est ou sont choisie(s) en fonction du produit dont le niveau est à détecter, de sorte à permettre une diffusion des micro-ondes dans le produit. Dans le cas d'un liquide, par exemple de l'eau ou des boues, des fréquences entre 2 et 3 GHz sont appropriées; une fréquence voisine de 2,4 GHz est particulièrement adaptée, et notamment pour le support formé de platines électroniques standard. La plage de fréquence peut cependant aller jusqu'à 20 GHz, en fonction notamment du type de support, de la forme des antennes et du matériau dont on détecte le niveau. Pour un support en verre Téflon, la valeur serait plus élevée, par exemple de 12 à 15 GHz.

La carte présente, en différents points sur sa longueur, des récepteurs de micro-ondes. Dans le mode de réalisation de la figure 3 sont prévus quatre récepteurs, régulièrement répartis le long de la carte. Chacun des récepteurs comprend une antenne micro-ondes 12 à 15 reliée via un coupleur 18 à 21 à la base d'un transistor 24 à 27. Une ligne d'alimentation 11 relie l'émetteur 10 et chacun des coupleurs 18 à 21, de sorte à assurer l'alimentation des antennes.

L'émetteur de chacun des transistors 24 à 27 est relié au plan d'alimentation de la carte imprimée, par l'intermédiaire de résistances de calibration. Le collecteur de chacun des transistors est relié à un connecteur 30 situé à l'extrémité de la carte. Sur ce connecteur est monté un câble relié à des moyens de mesure non représentés, qui sont avantageusement contenus dans le coffret 4 décrit en référence aux figures 1 et 2. Le câble permet aussi d'alimenter les différents composants actifs de la carte imprimée.

Le fonctionnement du dispositif des figures 1 à 3 est le suivant. L'émetteur 10 émet des micro-ondes dans le produit dont le niveau doit être détecté. Les micro-ondes émises sont diffusées à travers le produit, et sont reçues par le ou les récepteurs qui sont dans le produit, i.e. qui sont situés en dessous du niveau du produit. Inversement, le ou les récepteurs qui se trouvent au dessus du niveau du produit, i.e. dans l'air au dessus du produit ne reçoivent peu ou pas de micro-ondes, du fait de l'affaiblissement plus important des micro-ondes en propagation dans l'air.

Les différents transistors fournissent sur leur collecteur un signal dont l'amplitude est fonction de la puissance du signal micro-ondes reçu. Les moyens de mesure peuvent comparer ce signal à une valeur de seuil pour déterminer quels récepteurs se trouvent en dessous ou en dessus du niveau du produit. L'invention permet ainsi une détection du niveau, avec une précision fonction de la distance entre les différents récepteurs.

On peut aussi, au lieu de comparer l'amplitude du signal fourni par chacun des transistor avec une valeur de seuil, comparer entre eux les différents signaux, pour assurer de façon analogue une détection du niveau.

Les moyens de mesure pilotant la carte imprimée de l'invention peuvent être facilement réalisés par l'homme du métier, à partir de composants du commerce, pour implémenter les fonctions de comparaison nécessaires. On peut prévoir un calibrage de la valeur de seuil, en fonction de la nature du produit.

L'invention présente les avantages suivants. Elle est d'une mise en oeuvre simple et rapide, à partir de composants bon marché. Elle est utilisable dans des conditions difficiles, comme par exemple la détection de niveau de boues, ou de produits formant une croûte en surface. Dans la mesure où elle n'utilise pas pour la détection la surface, elle permet une mesure plus fiable que les dispositifs de l'art antérieur fonctionnant par réflexion. Le dispositif de l'invention est aussi résistant à l'accumulation d'effluents ou de polluant sur le dispositif de mesure.

Comme expliqué plus haut, on pourrait aussi monter l'émetteur et le ou les récepteurs dans des boîtiers ou sur des supports distincts, par exemple s'il est nécessaire de détecter des niveau sur une plage de hauteur importante. On pourrait aussi prévoir un ou plusieurs émetteurs indépendants, disposés par exemple au fond du conteneur destiné à recevoir le produit. Ces différents modes de réalisation sont moins simples que celui décrit en référence aux figures 1 à 3, mais peuvent être préférables pour des applications spécifiques.

L'invention est susceptible de nombreuses applications. Elle peut par exemple s'appliquer à la commande d'une station de relevage d'une ou plusieurs pompes. Le dispositif de l'invention permet alors la détection de plusieurs niveaux pré-établis, et correspondant aux différents récepteurs. Le dispositif de l'invention peut être fixé en partie supérieure d'une cuve, pour une installation ou un remplacement aisé.

L'invention peut être utilisée comme élément de détection d'une sonde immergeable et lestée. Dans un tel cas, le dispositif de l'invention est monté à l'extrémité d'un câble, lui même monté sur un enrouleur. La commande de l'enrouleur permet de faire varier la longueur de câble déroulé, et le dispositif de l'invention permet de détecter lorsque l'extrémité du câble pénètre dans le liquide. L'enrouleur du câble peut être monté sur tout point d'accroche, tel qu'une équerre de fixation, une potence, un presse-étoupe, ou autre.

L'invention peut aussi être utilisée pour la commande d'une pompe submersible, par exemple une pompe dite vide-cave, en intégrant à la pompe un dispositif de détection de deux niveaux. Elle peut être employée pour protéger les poupes contre le manque d'eau et le fonctionnement à vide, en détectant la présence et le niveau du liquide véhiculé.

L'invention peut être utilisée dans le fluide ou le produit à détecter, comme dans les exemples précédents. Il est aussi possible de détecter le niveau de produit à travers une paroi, constituée d'un matériau isolant; on peut ainsi détecter un niveau à l'extérieur d'un contenant. Ceci permet par exemple de détecter le niveau de produit dans un tube, depuis l'extérieur. On arrive à détecter un écoulement total ou plein tube, un écoulement partiel, ou encore un écoulement nul.

L'invention pourrait aussi être utilisée pour la commande de robinets dans des chasses d'eau, ou pour toute autre application nécessitant de détecter des niveaux.

Bien entendu, la présente invention n'est pas limitée aux exemples et modes de réalisation décrits et représentés, mais elle est susceptible de nombreuses variantes accessibles à l'homme de l'art. On pourrait ainsi utiliser plusieurs émetteurs, des récepteurs disposés selon des configurations différentes, plusieurs plages de micro-ondes. On pourrait dériver de la mesure des informations relatives au produit dont le niveau est détecté, si la diffusion des micro-ondes dépend du produit. Il est aussi clair que l'invention n'est pas limitée au mode de réalisation préféré décrit en référence aux figures, ni aux applications données à titre d'exemple.

## Revendications

1. Dispositif de détection de niveau, comprenant
- un émetteur de micro-ondes (10), pour émettre des micro-ondes dans un produit dont le niveau est à détecter;
- au moins un récepteur (12, 18, 24; 13, 14, 25; 14, 20, 26; 15, 21, 27) de micro-ondes, pour recevoir les micro-ondes diffusées dans le produit;
- des moyens de mesure de la puissance reçue par le ou les récepteurs.

2. Dispositif selon la revendication 1, caractérisé par une pluralité de récepteurs correspondant aux différents niveaux à détecter.

3. Dispositif selon la revendication 1 ou 2, caractérisé en ce que les micro-ondes présentent une fréquence entre 2 et 3, de préférence voisine de 2,4 GHz.

4. Dispositif selon la revendication 1, 2 ou 3, caractérisé en ce que les moyens de mesure comparent la valeur de la puissance reçue avec une valeur de seuil.

5. Dispositif selon l'une des revendications 1 à 4, caractérisé en ce que l'émetteur et le ou les récepteurs sont alignés sur un même support (5).

6. Procédé de détection de niveau, comprenant
- l'émission de micro-ondes dans le produit dont le niveau est à détecter;
- la réception de micro-ondes sur au moins un récepteur disposé à un niveau à détecter;
- la mesure de la puissance reçue par le ou les récepteurs.

7. Procédé selon la revendication 6, caractérisé en ce que la fréquence des micro-ondes est choisie de sorte à permettre leur diffusion dans le produit dont le niveau est à détecter.

8. Procédé selon la revendication 6 ou 7, caractérisé en ce que la fréquence des micro-ondes est comprise entre 2 et 3, et est de préférence voisine de 2,4 GHz.

9. Procédé selon la revendication 6, 7 ou 8, caractérisé en ce que l'étape de mesure comprend la comparaison de la puissance reçue avec une valeur de seuil.

10. Procédé selon l'une des revendications 6 à 9, caractérisé en ce que l'étape d'émission s'effectue par immersion d'un émetteur dans le produit dont le niveau est à détecter.

11. Procédé selon l'une des revendications 6 à 9, caractérisé en ce que l'étape d'émission s'effectue depuis l'extérieur du contenant du produit dont le niveau est à détecter.
